## Europäisches Patentamt
## European Patent Office
## Office européen des brevets

(19)

(11) Veröffentlichungsnummer: **0 114 279**
**B1**

(12) **EUROPÄISCHE PATENTSCHRIFT**

(45) Veröffentlichungstag der Patentschrift:
01.04.87

(21) Anmeldenummer: 83112341.9

(22) Anmeldetag: 08.12.83

(51) Int. Cl.⁴: **G 02 B 23/16**

(54) Einblick-Vorrichtung für ein Sichtgerät.

(30) Priorität: 20.01.83 CH 310/83

(43) Veröffentlichungstag der Anmeldung:
01.08.84 Patentblatt 84/31

(45) Bekanntmachung des Hinweises auf die Patenterteilung:
01.04.87 Patentblatt 87/14

(84) Benannte Vertragsstaaten:
AT BE CH DE FR GB IT LI NL SE

(56) Entgegenhaltungen:
DE - A - 2 632 263
US - A - 2 852 975
US - A - 3 669 523
US - A - 3 781 560
US - A - 3 868 169

(73) Patentinhaber: CONTRAVES AG,
Schaffhauserstrasse 580, CH-8052 Zürich (CH)

(72) Erfinder: Arndt, Klaus, Münzelweg 327d,
CH-5506 Mägenwil (CH)
Erfinder: Senvido, Saverio, Fabrikstrasse 3,
CH-8152 Glattbrugg (CH)

ACTORUM AG

## Beschreibung

Die Erfindung betrifft eine Einblick-Vorrichtung für ein Sichtgerät mit mindestens einem Okular, insbesondere für ein Tag- und Nachtsicht-Visiergerät zum Ausrichten einer Waffe, welche Einblick-Vorrichtung mit einem ersten Haltekörper an dem Gehäuse des Sichtgerätes angeordnet ist und einen dem Okular zugeordneten Stützkörper aus elastomerem Kunststoff umfasst.

Aus der US-A 2 852 975 ist eine Einblick-Vorrichtung bekannt, welche einen mit zwei seitlichen Schenkelteilen und einem Stirnstützteil versehenen Stützkörper umfasst. Der aus elastomerem Kunststoff hergestellte Stützkörper umschliesst im wesentlichen zwei Okulare einer optischen Einrichtung und ist aufgrund der eigenen Flexibilität in begrenztem Bereich an die Kopfform eines Beobachters anpassbar.

Weiterhin ist aus der US-A 781 560 ein brillenartig ausgebildetes Nachtsichtgerät bekannt, welches auf der einen Seite eines Gehäuses zwei im Abstand zueinander angeordnete Lichtquellen mit zugeordnetem Linsensystem und auf der anderen Seite des Gehäuses zwei angeformte Abschirmelemente umfasst. Das Gerät wird mittels Riemen am Kopf eines Benutzers befestigt, wobei die dem Kopf zugewandte Seite der aus elastomerem Kunststoff hergestellten Abschirmelemente in begrenztem Bereich an die jeweilige Kopfform anpassbar ist.

Bei einem optischen Beobachtungsgerät (vgl. CH-Patentschrift 496 246) ist ferner bekannt, für die Bestimmung der Lage des Beobachterkopfes und für die Blickrichtung des Beobachtungsauges in bezug auf die Visierachse eine brillenartig ausgebildete Einblick-Vorrichtung mit daran angeordneter Stirnstütze sowie Kinnstütze vorzusehen.

Beim Bau von derartigen Sicht- oder Beobachtungsgeräten, insbesondere bei Visiergeräten zum Ausrichten einer Waffe, muss eine gute Anpassungsfähigkeit des Stützkörpers an die Kopfform verschiedener Beobachter berücksichtigt werden, damit der jeweilige Beobachter einen einwandfreien und gegen äusseren Lichteinfall geschützten Einblick in das Gerät erhält.

Ausgehend von diesem Stand der Technik liegt der Erfindung die Aufgabe zugrunde, die bekannte Einblick-Vorrichtung sowie den Stützkörper so weiterzuentwickeln, dass eine relativ grosse Veränderbarkeit des Stützkörpers erreicht wird und dadurch ein einwandfreier Einblick des Beobachters mit oder ohne Schutzmaske beziehungsweise mit oder ohne Schutzhelm gewährleistet ist.

Diese Aufgabe wird erfindungsgemäss dadurch gelöst, dass der Stützkörper mit zwei seitlichen, quer zur Blickrichtung im Abstand zueinander angeordneten Gelenken an dem ersten Haltekörper der Einblick-Vorrichtung angelenkt und gehalten ist, derart, dass infolge der durch die Gelenke ermöglichten Bewegung die dem Beobachter zugewandte Stirnanlage sowie zwei daran angeformte Seitenteile des Stützkörpers durch geringen Anpressdruck an unterschiedliche Beobachter-Kopfformen anpassbar und selbsttätig rückstellbar ist/sind.

Bei einem Sichtgerät, insbesondere bei einem Tag- und Nachtsicht-Visiergerät mit einer in dem Gehäuse angeordneten Messeinrichtung, beispielsweise mit einer Laser-Distanzmesseinrichtung, ist nach einem weiteren Merkmal der Erfindung zur Betätigung der Messeinrichtung ein mit einem Sicherungsschalter in Wirkverbindung stehendes Schaltglied vorgesehen.

Weitere Merkmale der Erfindung ergeben sich aus der folgenden Beschreibung in Verbindung mit der Zeichnung und den Patentansprüchen.

Die Erfindung wird nachstehend unter Bezugnahme auf die Zeichnung näher beschrieben. Es zeigt:

Fig. 1 ein in Seitenansicht dargestelltes Schaubild einer an einem Sichtgerät angeordneten Einblick-Vorrichtung,

Fig. 2 die in grösserem Massstab und im Vertikalschnitt dargestellte Einblick-Vorrichtung,

Fig. 3 die in Ansicht gemäss Pfeilrichtung X dargestellte Einblick-Vorrichtung gemäss Fig. 2,

Fig. 4 einen in Draufsicht dargestellten Haltekörper für einen Stützkörper der Einblick-Vorrichtung, und

Fig. 5 den in Draufsicht dargestellten Stützkörper der Einblick-Vorrichtung.

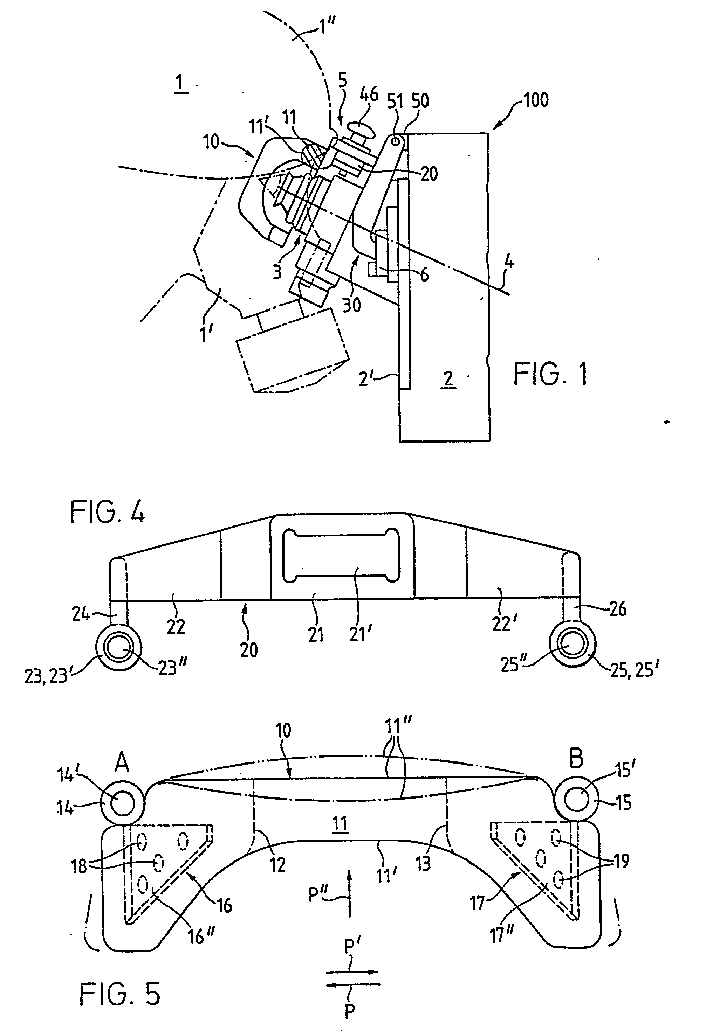

Fig. 1 zeigt ein Teilstück eines Gehäuses 2 für ein in seiner Gesamtheit mit 100 bezeichnetes Sichtgerät, insbesondere für ein Tag- und Nachtsicht-Visiergerät zum Ausrichten einer nicht dargestellten Waffe. An der Vorderseite 2' des Gehäuses 2 ist ein Okular 3 mit der optischen Achse 4 sowie eine Einblick-Vorrichtung 5 für einen Beobachter 1 angeordnet.

Die Einblick-Vorrichtung 5 umfasst einen Stützkörper 10, einen ersten Haltekörper 20 für den Stützkörper 10, einen zweiten Haltekörper 30 für die Teile 10 und 20 sowie einen am Gehäuse 2 mit nicht dargestellten Mitteln befestigten Lagerkörper 50 für den zweiten Haltekörper 30. Die Teile 10, 20 und 30 bilden im wesentlichen eine Baueinheit, die an einem in dem Lagerkörper 50 gelagerten Bolzen 51 angelenkt ist.

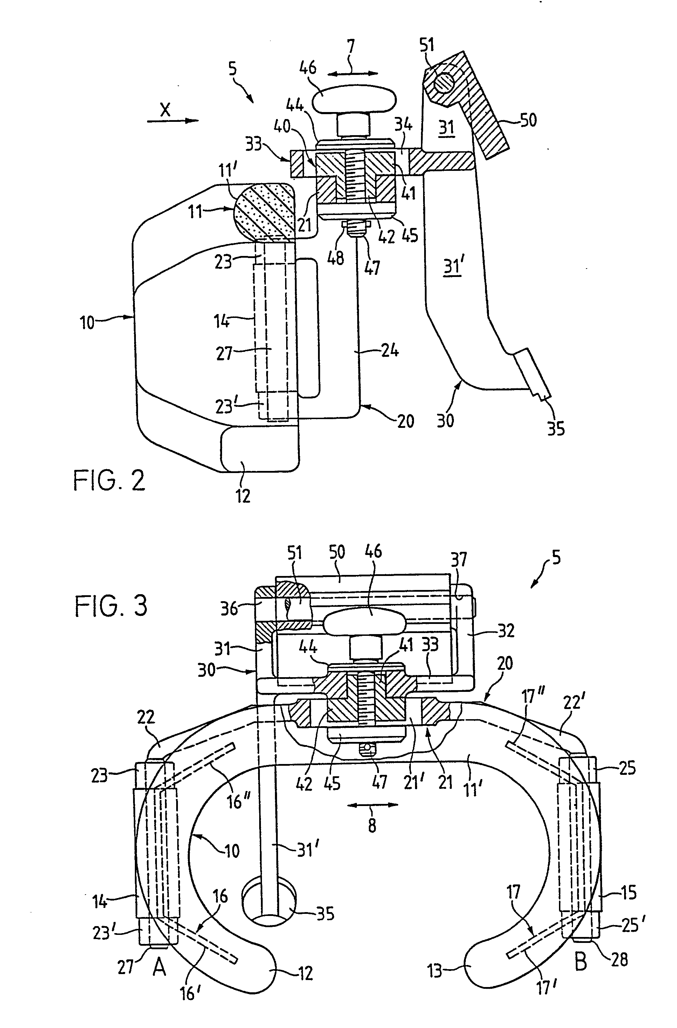

In Fig. 2 ist die Einblick-Vorrichtung 5 im Vertikalschnitt und in Fig. 3 in Ansicht gemäss Pfeilrichtung X dargestellt, welche nachstehend im einzelnen beschrieben wird.

Der im Giessverfahren aus elastomerem Schaum-Kunststoff, vorzugsweise aus Polyurethan-Integralschaum hergestellte Stützkörper 10 hat eine Stirnanlage 11 sowie zwei daran angeformte Seitenpartien 12 und 13. In Fig. 5 ist der Stützkörper 10 in Draufsicht dargestellt und man erkennt die auf der Innenseite 11' mit einer weitgehend der Stirn des menschlichen Kopfes entsprechenden Formgebung ausgebildete Stirnanlage 11 sowie die beiden angeformten, wie in Fig. 3 näher dargestellt, weitgehend halbkreisförmig ausgebildeten Seitenpartien 12 und 13. An der Aussenseite 11" der Stirnanlage 11 sind zwei im Abstand zueinander angeordnete und als Ge-lenke A, B ausgebildete Buchsen 14, 15 vorgesehen, die axial und in vertikaler Richtung je von einer Bohrung 14', 15' durchdrungen werden. Die beiden Buchsen 14, 15 werden beim Giessvorgang entsprechend integriert und bilden mit dem Stützkörper 10 eine Baueinheit.

Zur Versteifung des Stützkörpers 10 ist an den beiden Buchsen 14, 15 je ein angewinkelt ausgebildetes und mit verteilt angeordneten Löchern 18, 19 versehenes Blech 16, 17 angeordnet und mit nicht dargestellten Mitteln befestigt. In den Figuren 3 und 5 erkennt man die jeweils mit den abgewinkelten Teilstücken 16', 16" und 17', 17" in den Seitenpartien 12 und 13 sowie in der Stirnanlage 11 angeordneten Bleche 16 und 17. Die beiden Bleche 16, 17 sind von dem Integralschaum umgeben, wobei durch die Löcher 18, 19 eine Homogenisierung des auf der einen und anderen Seite an den Blechen 16, 17 haftenden Integralschaums erreicht wird. Gemäss der Darstellung in Fig. 3 sind die halbkreisförmigen Seitenpartien 12, 13 im Abstand zueinander angeordnet, wodurch erreicht wird, dass auch dann ein störungsfreier Einblick gewährleistet ist, wenn der Beobachter 1 eine Schutzmaske 1' trägt.

Der aus elastischem Schaum-Kunststoff hergestellte und an beiden Seiten mit den als Gelenk- oder Scharnierstellen A und B dienenden Buchsen 14, 15 versehene Stützkörper 10 gewährleistet ein hinreichendes Anpassen an unterschiedliche Beobachter-Kopfformen mit oder ohne Schutzhelm 1" beziehungsweise mit oder ohne Schutzmaske 1'. Gemäss der Darstellung in Fig. 5 kann durch geringen Anpressdruck des Beobachers 1 in Pfeilrichtung P, P' oder in Pfeilrichtung P" der Stützkörper 10 verformt und entsprechend angepasst werden, wobei durch Druck in Pfeilrichtung P, P' oder P" annähernd die entsprechend als Beispiel strichpunktiert dargestellte Verformung des Stützkörpers 10 erreicht wird.

In Fig. 2 ist im Vertikalschnitt die Einblick-Vorrichtung 5 in grösserem Massstab dargestellt und man erkennt den Stützkörper 10, den ersten Haltekörper 20 sowie den zweiten Haltekörper 30. Der zweite Haltekörper 30 weist ein zur Aufnahme und Befestigung des ersten Haltekörpers 20 ausgebildetes Auslegerteil 33 auf, an welchem der mit einem entsprechend ausgebildeten Lagerelement 21 versehene erste Haltekörper 20 lösbar und in horizontaler Ebene verstellbar befestigt ist. Weiterhin erkennt man eine Stellschraube 46, eine erste Scheibe 44, ein als Kreuzkörper ausgebildetes Zentrierelement 40, einen durch einen Stift 48 gesicherten Gewindebolzen 47 sowie eine zweite Scheibe 45.

Der erste Haltekörper 20 ist zusammen mit dem Stützkörper 10, wie in Fig. 2 dargestellt, in bezug auf den zweiten Haltekörper 30 in Pfeilrichtung 7 und wie in Fig. 3 dargestellt in Pfeilrichtung 8 verstellbar und mittels der Stellschraube 46 feststellbar. Eine exakt geführte Verstellbarkeit des ersten Haltekörpers 20 in Pfeilrichtung 7 und 8 wird durch das obere, in einer Aussparung 34 des Auslegerteils 33 geführte Teilstück 41 sowie durch das untere, in einer Aussparung 21' des ersten Haltekörpers 20 geführte Teilstück 42 des Zentrierelements 40 erreicht.

Der in Fig. 4 in Draufsicht dargestellte erste Haltekörper 20 umfasst das Auflageelement 21 mit der Aussparung 21', zwei seitlich daran angeformte Ausleger 22, 22' sowie an den Auslegern 22, 22' angeformte Tragarme 24 und 26. An dem Tragarm 24 sind zwei in vertikaler Richtung im Abstand zueinander angeordnete Lageraugen 23, 23' und an dem Tragarm 26 zwei in vertikaler Richtung im Abstand zueinander angeordnete Lageraugen 25, 25' vorgesehen. Die Lageraugen 23, 23' werden je von einer Bohrung 23" und die Lageraugen 25, 25' je von einer Bohrung 25" durchdrungen.

In Fig. 3 ist in Ansicht gemäss der in Fig. 2 dargestellten Pfeilrichtung X die Einblick-Vorrichtung 5 dargestellt und man erkennt den Stützkörper 10, die beiden Ausleger 22, 22' mit den Lageraugen 23, 23' und 25, 25' des ersten Haltekörpers 20 sowie den weitgehend gabelförmig ausgebildeten zweiten Haltekörper 30. Der Stützkörper 10 ist mit den beiden Buchsen 14 und 15 zwischen den in vertikaler Richtung im Abstand zueinander angeordneten Lageraugen 23, 23' und 25, 25' eingesetzt und wird auf der einen Seite durch einen die Teile 23, 14, 23' durchdringenden Bolzen 27 und auf der anderen Seite durch einen die Teile 25, 15, 25' durchdringenden Bolzen 28 gehalten. Die beiden Bolzen 27, 28 sind mit nicht dargestellten Mitteln gegen Herausfallen gesichert.

Der zweite Haltekörper 30 umfasst das Auslegerteil 33 mit der Aussparung 34 sowie einen ersten und einen zweiten Schenkel 31 und 32. Die beiden Schenkel 31, 32 weisen im oberen Bereich je eine Durchgangsbohrung 36, 37 zur Lagerung des Bolzens 51 auf, wobei der Bolzen 51 zur Aufnahme des zwischen den beiden Schenkeln 31, 32 angeordneten Lagerkörpers 50 dient. Der Bolzen 51 ist mit nicht dargestellten Mitteln gesichert. Auf der Seite des ersten Schenkels 31 ist an dem Auslegerteil 33 ein weiteres Schenkelteil 31' angeformt, welches im unteren Bereich ein tellerförmig ausgebildetes Schaltglied 35 aufweist. Das Schaltglied 35 steht mit einem in Fig. 1 schematisch dargestellten Sicherungsschalter 6 in Wirkverbindung, wobei durch Druck des Beobachters 1 gegen die Innenseite 11' des Stützkörpers 10 der Sicherungsschalter 6 und dadurch im wesentlichen eine in dem Gehäuse 2 angeordnete, nicht dargestellte Messeinrichtung, vorzugsweise eine Laser-Distanzmesseinrichtung betätigt wird.

**Patentansprüche**

1. Einblick-Vorrichtung (5) für ein Sichtgerät (100) mit mindestens einem Okular (3), insbesondere für ein Tag- und Nachtsicht-Visiergerät zum Ausrichten einer Waffe, welche Einblick-Vorrichtung (5) mit einem ersten Haltekörper (20) an dem Gehäuse (2) des Sichtgerätes (100) angeordnet ist und einen dem Okular (3) zugeordneten Stützkörper (10) aus elastomerem Kunststoff umfasst, dadurch gekennzeichnet, dass der Stützkörper (10) mit zwei seitlichen, quer zur Blickrichtung im Abstand zueinander angeordneten Gelenken (A, B) an dem ersten Haltekörper (20) der Einblick-Vorrichtung (5) angelenkt und gehalten ist, derart, dass infolge der durch die Gelenke ermöglichten Bewegung die dem Beobachter (1) zugewandte Stirnanlage (11) sowie zwei daran angeformte Seitenpartien (12, 13) des Stützkörpers (10) durch geringen Anpressdruck an unterschiedliche Beobachter-Kopfformen anpassbar und selbsttätig rückstellbar ist/sind.

2. Einblick-Vorrichtung nach Anspruch 1, dadurch gekennzeichnet, dass der Stützkörper (10), der erste Haltekörper (20) und ein zweiter Haltekörper (30) im wesentlichen eine mit einem Lagerkörper (50) an dem Gehäuse (2) des Sichtgerätes (100) angelenkte Baueinheit bilden, wobei ein an dem zweiten Haltekörper (30) angeordnetes Schaltglied (35) durch den Anpressdruck mit einem eine Laser-Distanzmesseinrichtung betätigenden Sicherungsschalter (6) in Eingriff bringbar ist.

3. Einblick-Vorrichtung nach Anspruch 1, dadurch gekennzeichnet, dass der Stützkörper (10) aus elastomerem Schaum-Kunststoff hergestellt ist und an seiner Aussenseite (11″) zwei integrierte und als Gelenke (A, B) ausgebildete Buchsen (14, 15) aufweist.

4. Einblick-Vorrichtung nach Anspruch 1 und 3, dadurch gekennzeichnet, dass der Stützkörper (10) aus Polyurethan-Integralschaum im Giessverfahren hergestellt ist und zur Versteifung der beiden Seitenpartien (12, 13) mit an den Buchsen (14, 15) befestigten, integrierten Blechen (16, 17) versehen ist.

5. Einblick-Vorrichtung nach Anspruch 1, dadurch gekennzeichnet, dass der erste Haltekörper (20) zur Aufnahme des Stützkörpers (10) zwei an Tragarmen (24, 26) angeordnete und mit den Gelenken (A, B) korrespondierende, gabelartig im Abstand zueinander angeordnete Lageraugen (23, 23′ und 25, 25′) aufweist.

6. Einblick-Vorrichtung nach Anspruch 2, dadurch gekennzeichnet, dass der zur Halterung des Stützkörpers (10) und des ersten Haltekörpers (20) ausgebildete zweite Haltekörper (30) mit zwei im Abstand zueinander angeordneten Schenkeln (31, 32) an dem am Gehäuse (2) befestigten Lagerkörper (50) schwenkbar gelagert ist, und dass mindestens an einem der beiden Schenkel (31, 32) ein verlängertes Schenkelteil (31′) mit dem tellerförmig ausgebildeten Schaltglied (35) vorgesehen ist.

## Claims

1. Eyepiece device (5) for a viewing apparatus (100) with at least one eyepiece (3), in particular for a day- and night-viewing device for aligning a weapon, which eyepiece device (5) is arranged with a first holding body (20) on the housing (2) of the viewing apparatus (100) and incorporates a support body (10) of elastomeric plastics material associated with the eyepiece (3), characterised in that the support body (10) is jointed and held on the first holding body (20) of the eyepiece device (5) with two lateral joints (A, B) arranged to be spaced apart and transverse to the line of vision, in such a way that because of the movement made possible by the joints, the front installation (11) facing the observer (1), and two side parts (12, 13) of the support body (10) moulded on this, can be reset adaptably and automatically, by means of a slight bearing pressure, to different observer head shapes.

2. Eyepiece device according to claim 1, characterised in that the support body (10), the first holding body (20) and a second holding body (30) substantially form a structural unit jointed with the bearing body (50) on the housing (2) of the viewing apparatus (100), whereby a switch element (35) arranged on the second holding body (30) can be brought into engagement, by means of the bearing pressure, with a safety switch (6) actuating a laser distance measuring device.

3. Eyepiece device according to claim 1, characterised in that the support body (10) is made of elastomeric plastic foam and on its outer side (11″) has two integrated bushings (14, 15) constructed as joints (A, B).

4. Eyepiece device according to claim 1 and 3, characterised in that the support body (10) is made of polyurethane integral foam in the casting process and is provided with integrated plates (16, 17) secured on the bushings (14, 15) for reinforcing the two side parts (12, 13).

5. Eyepiece device according to claim 1, characterised in that the first holding body (20) for receiving the support body (10) has two bearing lugs (23, 23′ and 25, 25′) arranged on carrier arms (24, 26) and corresponding with the joints (A, B) and arranged spaced apart like a fork.

6. Eyepiece device according to claim 2, characterised in that the second holding body (30) constructed for holding the support body (10) and the first holding body (20) is pivotably mounted on the bearing body (50) secured on the housing (2), with two arms (31, 32) arranged to be spaced apart, and in that on at least one of the two arms (31, 32) an extended arm part (31′) is provided with the switch member (35) constructed as a plate.

## Revendications

1. Masque de protection (5) pour un dispositif de visée (100) comportant un oculaire (3), notamment pour un dispositif de visée de jour et de nuit pour pointer une arme, ce masque de protection (5) étant monté par l'intermédiaire d'un premier organe de fixation (20) sur le boîtier (2) du dispositif de visée (100) et comporte un organe d'appui (10) associé à l'oculaire (3) et réalisé en matière synthétique élastomère, caractérisé en ce que l'organe d'appui (10) est relié, de façon articulée, par deux articulations (A et B), latérales, prévues transversalement à la direction de visée à une certaine distance l'une de l'autre sur le premier organe de fixation (20) du masque de protection (5) et maintenu de façon que par suite du mouvement rendu possible par les articulations, l'appui frontal (11) tourné vers l'observateur (1) ainsi que deux parties latérales (12,13) formées sur cet appui de l'organe d'appui (10), puissent s'adapter par de faibles pressions d'application à différentes formes de têtes des observateurs et puissent revenir automatiquement en retour.

2. Masque de protection selon la revendication 1, caractérisé en ce que l'organe d'appui (10), le premier organe de fixation (20) et un second organe de fixation (30) forment principalement un ensemble constructif relié de manière articulée par un corps de palier (50) sur le boîtier (2) du dispositif de visée (100), un organe de commutation (35) prévu sur le second organe de fixation (30) pouvant être mis en prise avec un commutateur de sécurité (6) actionnant sous l'effet de la pression d'application, un télémètre à laser.

3. Masque de protection selon la revendication 1, caractérisé en ce que l'organe d'appui (10) est réalisé en mousse synthétique élastomère et comporte, sur sa face extérieure (11″), deux douilles (14, 14′) intégrées et réalisées comme articulations (A, B).

4. Masque de protection selon les revendications 1 et 3, caractérisé en ce que l'organe d'appui (10) est en mousse intégrale de polyuréthane fabriquée par injection et en ce que, pour rigidifier les deux parties latérales (12, 13), il comporte des tôles (16, 17) intégrées et fixées aux douilles (14, 15).

5. Masque de protection selon la revendication 1, caractérisé en ce que le premier organe de fixation (20) comporte deux œillets de paliers (23, 23′ et 25, 25′) prévus à une certaine distance l'un de l'autre à la manière de fourches, correspondant aux articulations (A, B) et prévus sur les bras de support (24, 26) pour recevoir l'organe d'appui (10).

6. Masque de protection selon la revendication 2, caractérisé en ce que le second organe de fixation (30) réalisé pour supporter l'organe d'appui (10) et le premier organe de fixation (20) comporte deux branches (31, 32) à une certaine distance l'une de l'autre, assurant son montage pivotant sur le corps de palier (50) fixé au boîtier (2), et en ce qu'au moins l'une des deux branches (31, 32) comporte une partie de branche (31′), prolongée avec un organe de commutation (35) en forme de coupelle.

FIG. 1

FIG. 4

FIG. 5

FIG. 2

FIG. 3